# EUROPÄISCHE PATENTSCHRIFT

(11) **EP 2 102 522 B1**
(45) Veröffentlichungstag und Bekanntmachung des Hinweises auf die Patenterteilung: **21.04.2010**
(21) Anmeldenummer: 07819594.8
(22) Anmeldetag: 05.11.2007
(51) Int. Cl.: F16D 65/00

(54) **BREMSSTAUBSAMMELVORRICHTING**
BRAKE DUST COLLECTING DEVICE
COLLECTEUR DE POUSSIÈRES DE FREINAGE

(30) Priorität: 03.11.2006 DE 102006051972
(43) Veröffentlichungstag der Anmeldung: 23.09.2009
(73) Patentinhaber: KT Projektentwicklungs-GmbH, 74076 Heilbronn (DE)
(72) Erfinder: KT Projektentwicklungs-GmbH, 74076 Heilbronn (DE)
(74) Vertreter: Wahl, Hendrik
(86) Internationale Anmeldenummer: PCT/EP2007/009572
(87) Internationale Veröffentlichungsnummer: WO 2008/052805

(56) Entgegenhaltungen:
- CH-A5- 687 013
- DE-A1- 3 934 422
- DE-U1-202005 006 844
- FR-A- 2 815 099

## Beschreibung

Die vorliegende Erfindung betrifft eine Bremsstaubsammelvorrichtung für eine Scheibenbremse, insbesondere eine Kraftfahrzeugscheibenbremse, wobei die Scheibenbremse eine Bremsscheibe und einen letztere übergreifenden Bremssattel aufweist, und wobei die Bremsstaubsammelvorrichtung mit einem Gehäuse, das zum Übergreifen eines Abschnitts der Bremsscheibe ausgebildet ist, der sich in Hauptdrehrichtung der Bremsscheibe unmittelbar an den Bremssattel anschließt, und einer in dem Gehäuse angeordneten Bremsstaubrückhalteeinrichtung mit mehreren Bremsstaubeinlassöffnungen versehen ist. Eine solche Bremsstaubsammelvorrichtung ist aus der DE 39 34 422 A1 bekannt.

Bei Bremsen, die nach dem Reibungsprinzip funktionieren, entsteht während des Bremsvorgangs Abrieb, hauptsächlich durch das sich während einer Bremsung sukzessive abnutzende Reibbelagmaterial. Da Scheibenbremsen offene Konstruktionen sind, bleibt dieser Materialabrieb nicht in der Bremse eingeschlossen, sondern verteilt sich im Fahrbetrieb aufgrund des Fahrtwindes und anderer Witterungseinflüsse wie z.B. Regen mehr oder weniger weitläufig. Insbesondere lagert sich der auch als Bremsstaub bezeichnete Materialabrieb in der unmittelbaren Umgebung einer Scheibenbremse ab, im Falle eines Kraftfahrzeugs demnach hauptsächlich auf der Radfelge. Da der Bremsstaub ein bräunliches bis schwarzes Aussehen hat, wird dessen Ablagerung auf den sichtbaren Bereichen einer Radfelge als ästhetisch störend empfunden. Entfernt man den abgelagerten Bremsstaub nicht in regelmäßigen Abständen, frisst sich der Bremsstaub zudem regelrecht in das Material der Radfelge hinein und verändert die Oberfläche der betroffenen Radfelge dauerhaft auf unschöne Weise. Jedoch ist auch eine Abgabe des Bremsstaubes an die Umwelt nicht erwünscht, denn es handelt sich dabei um gesundheitlich bedenklichen Feinstaub. Zudem sind die Bestandteile der Reibbelagmaterialien, die sich dann auch im Bremsstaub wiederfinden, teils gesundheitsgefährdend.

Um solchen unerwünschten Bremsstaubablagerungen zu begegnen, sind unterschiedliche Lösungsansätze verfolgt worden. So beschreibt das deutsche Gebrauchsmuster 79 31 520 im Zusammenhang mit einer Kraftfahrzeugscheibenbremse ein die Bremsscheibe felgenseitig zumindest im Bereich der Scheibenbremse abdeckendes Bremsstaub-Ableitblech, das am Radnabenhalter und/oder an der Scheibenbremse befestigt ist und radinnenseitig einen radial nach außen gerichteten Bremsstaubauslass aufweist. Eine ähnliche Lösung in Gestalt einer ringförmigen Einlegeplatte, die sich zwischen der Felge eines Rades und der Bremsscheibe einer Scheibenbremse befindet, ist aus dem europäischen Patent mit der Veröffentlichungsnummer 0 204 433 bekannt. Diese Lösungen verhindern allerdings nicht die Freisetzung des Bremsstaubes an sich, sondern lediglich seine Ablagerung an bestimmten Stellen eines Fahrzeugrades.

Aus der DE 42 40 873 C2 ist eine Bremsstaubrückhaltevorrichtung für Kraftfahrzeuge bekannt, die mittels eines Sauggebläses Unterdruck erzeugt und Bremsstaub am Entstehungsort absaugt. Der abgesaugte Bremsstaub wird in einer dem Sauggebläse benachbarten Filtereinheit aufgefangen. Eine ähnliche Bremsstaubrückhaltevorrichtung ist aus der DE 196 43 869 A1 bekannt, bei der ebenfalls entstehender Bremsstaub mittels einer Saugvorrichtung abgesaugt und in einen Sammelbehälter überführt wird. Eine weitere Bremsstaubsammelvorrichtung ist aus der EP 1 256 739 A2 bekannt. Die dort beschriebene Vorrichtung verwendet nahe dem Entstehungsort des Bremsstaubes angeordnete Platten, die elektrostatisch aufgeladen werden oder in denen ein elektromagnetisches Feld erzeugt wird, um den entstehenden Bremsstaub anzuziehen und festzuhalten. Der auf diese Weise zurückgehaltene Bremsstaub wird intervallweise von den Platten entfernt und in einen Sammelbehälter überführt.

Aus der DE 198 46 887 C2 ist eine Bremsanlage für ein Kraftfahrzeug bekannt, bei der jeder Reibbelag Staubkanäle in Form von Nuten aufweist, die zu einer im Reibbelag vorhandenen Ausnehmung zum Sammeln des Bremsstaubes oder alternativ zu einem Staubsammelbehälter führen.

Aus der DE 103 36 984 A1 ist eine Scheibenbremse bekannt, bei der eine Rückhaltevorrichtung für Bremsstaub mehrere Abstreifelemente umfasst, welche den Freiraum zwischen einem Trägerbauteil und der rotierenden Bremsscheibe zumindest bereichsweise überdecken und einerseits fest mit dem Trägerbauteil verbunden sind sowie andererseits in zumindest punktförmigem Kontakt mit der Bremsscheibe stehen. Je nach Ausführungsform dienen die Abstreifelemente entweder dazu, dem Bremsstaub lediglich (Wärme)Energie zu entziehen, um ein Einbrennen heißen Bremsstaubs in die Felge zu verhindern, oder sie sind so ausgeführt, dass der entstandene Bremsstaub sich beispielsweise zwischen einzelnen Fasern der Abstreifelemente anlagert und so an weiterer Ausbreitung gehindert ist. Die Abstreifelemente müssen dann von Zeit zu Zeit gereinigt werden, z.B. anlässlich eines Austausches der Reibbeläge. Ähnlich aufgebaut ist die Scheibenbremse gemäß der gattungsbildenden DE 39 34 422 A1, bei der entstehender Bremsstaub durch ein benachbart zur sich drehenden Bremsscheibe angeordnetes Strömungsleitgitter in einen bezüglich der Bremsscheibendrehachse radial und axial außerhalb des Strömungsleitgitters befindliches Filter geleitet wird, das den Bremsstaub zurückhält.

Alle zuvor erwähnten Vorrichtungen lassen Wünsche hinsichtlich einer vollständigen Lösung des Bremsstaubproblems offen. Manche der beschriebenen Vorrichtungen verhindern lediglich das Ablagern von Bremsstaub auf der Felge, nicht jedoch die Abgabe des entstehenden Bremsstaubes an die Umwelt. Andere der beschriebenen Vorrichtungen sorgen zwar für eine Zurückhaltung des Bremsstaubes nahe seinem Entstehungsort, führen aber aufgrund eines relativ großen umbauten Bereichs der Bremsscheibe zu Kühlungsproblemen der Bremse. Wieder andere der beschriebenen Vorrichtungen sind mit Sauggebläse und entsprechenden Saugleitungen technisch aufwendig und daher teuer.

Der Erfindung liegt die Aufgabe zugrunde, eine insgesamt zufriedenstellende Lösung des Bremsstaubproblems anzugeben. Ausgehend von der sich aus dem Patentanspruch 1 ergebenden gattungsgemäßen Bremsstaubsammelvorrichtung ist diese Aufgabe erfindungsgemäß dadurch gelöst, dass das Gehäuse mehrere Lufteinlassöffnungen hat, die von den Bremsstaubeinlassöffnungen der Bremsstaubrückhalteeinrichtung getrennt sind. Die physische Trennung der außen am Gehäuse der Bremsstaubsammelvorrichtung angeordneten Lufteinlassöffnungen von den im Gehäuse angeordneten Bremsstaubeinlassöffnungen ermöglicht es, ohne ein Sauggebläse oder andere mit externer Energie zu versorgender Hilfsmittel den entstehenden Bremsstaub gezielt in die Bremsstaubrückhalteeinrichtung der Bremsstaubsammelvorrichtung zu führen und darüber hinaus die durch die Lufteinlassöffnungen in die Bremsstaubsammelvorrichtung einströmende Luft zur Kühlung der sich drehenden Bremsscheibe zu verwenden. Obwohl auch die erfindungsgemäße Bremsstaubsammelvorrichtung einen Abschnitt der Bremsscheibe umbaut, hat sich bei Vergleichsmessungen gezeigt, dass bei gegebenen Bedingungen die Bremsscheibentemperatur einer mit der erfindungsgemäßen Bremsstaubsammelvorrichtung ausgestatteten Scheibenbremse sogar geringer ist als bei derselben Scheibenbremse ohne Bremsstaubsammelvorrichtung.

Vorzugsweise ist das Gehäuse der Bremsstaubsammelvorrichtung beidseits der Bremsscheibe mit wenigstens einer Lufteinlassöffnung versehen, die bezüglich der Hauptdrehrichtung der Bremsscheibe vor den Bremsstaubeinlassöffnungen angeordnet ist. Dies ermöglicht es auf einfache Weise, der durch die Lufteinlassöffnung einströmenden Luft die gewünschte Richtung zur Bremsscheibe und zu den Bremsstaubeinlassöffnungen hin zu geben. Die beidseits der Bremsscheibe, d.h. seitlich am Gehäuse der Bremsstaubsammelvorrichtung angeordneten Lufteinlassöffnungen sind vorzugsweise verrippt, um einen Eintritt von Fremdkörpern wie z.B. Split in die Bremsstaubsammelvorrichtung zu verhindern. Ferner erstrecken sich die die Lufteinlassöffnungen überspannenden Rippen vorzugsweise ein Stück weit in die Bremsstaubsammelvorrichtung hinein und bilden dabei zwischen sich Lufteinströmkanäle aus, deren Strömungsquerschnitt in Strömungsrichtung, also nach innen abnimmt. Auf diese Weise wird weitestgehend vermieden, dass in der Bremsstaubsammelvorrichtung aufgewirbelter Bremsstaub durch die Lufteinlassöffnungen nach außen strömt.

Bei anderen bevorzugten Ausführungsformen der erfindungsgemäßen Bremsstaubsammelvorrichtung weist das Gehäuse radial außerhalb der Bremsscheibe wenigstens eine Lufteinlassöffnung auf. Auch durch eine solche Lufteinlassöffnung kann die eintretende Luft gut so gerichtet werden, dass sie zur Bremsscheibe und zu den Bremsstaubeinlassöffnungen strömt. Vorzugsweise sind sowohl seitlich angeordnete Lufteinlassöffnungen als auch eine oder mehrere radial angeordnete Lufteinlassöffnungen vorhanden.

Zur weiteren Verbesserung der Luftströmung im Gehäuse der Bremsstaubsammelvorrichtung sind bei bevorzugten Ausgestaltungen Luftauslassöffnungen vorhanden, die räumlich getrennt von den Lufteinlassöffnungen angeordnet sind. Diese Luftauslassöffnungen sind vorzugsweise mit Filtern versehen, die Bremsstaub zurückhalten, Luft und Wasser jedoch passieren lassen. Auf diese Weise kann in die Bremsstaubsammelvorrichtung eingedrungenes Wasser problemlos abgeführt werden.

Zum Auffangen des im Bremsbetrieb entstehenden Bremsstaubes ist die Bremsstaubrückhalteeinrichtung vorzugsweise mit einer oder mehreren Bremsstaubsammelkammern versehen. Damit der entstehende, durch die Bremsstaubeinlassöffnungen in die Bremsstaubrückhalteeinrichtung gelangende Bremsstaub sich erst in dieser Bremsstaubsammelkammer absetzt, weist die Bremsstaubrückhalteeinrichtung auf beiden Seiten der Bremsscheibe wenigstens eine sich radial zur Bremsscheibe und entlang des Umfangs der Bremsscheibe erstreckende Lamelle auf, die an einer zugeordneten Bremsstaubeinlassöffnung beginnt und in der Bremsstaubsammelkammer endet. Bei manchen Ausführungsformen sind mehrere sich von jeweils einer zugeordneten Bremsstaubeinlassöffnung bis in die Bremsstaubsammelkammer erstreckende Lamellen vorhanden. Die Lamelle bzw. die Lamellen legen zwischen sich bzw. zwischen sich und dem Gehäuse Kanäle zum Leiten von Bremsstaub in die Bremsstaubsammelkammer fest, in denen die Strömungsgeschwindigkeit erhöht ist, so dass durch die am Beginn der Kanäle angeordneten Bremsstaubeinlassöffnungen in die Kanäle eingetretener Bremsstaub mitgerissen wird und sich nicht im Kanal ablagert. Bei besonders bevorzugten Ausführungsformen ist der Querschnitt der oder jeder Bremsstaubeinlassöffnung größer als ein Mündungsquerschnitt am Ende jeder Lamelle. Auf diese Weise nimmt der Strömungsquerschnitt der genannten Kanäle zum Leiten von Bremsstaub in die Bremsstaubsammelkammer vom Kanalanfang zum Kanalende vorzugsweise kontinuierlich ab und die Strömungsgeschwindigkeit im Kanal erhöht sich entsprechend. Nach dem Austritt der mit entstandenem Bremsstaub beladenen Luftströmung aus den Kanälen in die Bremsstaubsammelkammer nimmt die Strömungsgeschwindigkeit schlagartig ab und die mitgerissenen Bremsstaubpartikel fallen aus der Luftströmung aus und setzen sich in der Bremsstaubsammelkammer ab, während die Luft die Bremsstaubsammelkammer vorzugsweise durch die Luftauslassöffnungen verlässt. Die einzelnen Lamellen und damit die durch sie festgelegten Kanäle können sich im Wesentlichen geradlinig nebeneinander erstrecken. Bei einer bevorzugten Ausführungsform erstreckt sich jede Lamelle jedoch entlang des Umfangs der Bremsscheibe zunächst in der Hauptdrehrichtung, dann radial einwärts und schließlich entgegen der Hauptdrehrichtung. Optimierungen der Lamellen- und Kanalform können unter strömungstechnischen Gesichtspunkten vorgenommen werden, um ein möglichst vollständiges Mitreißen des entstandenen Bremsstaubes durch die Kanäle und anschließend eine möglichst vollständige und gleichmäßige Ablagerung des mitgerissenen Bremsstaubes in der Bremsstaubsammelkammer zu erreichen.

Bei bevorzugten Ausführungsformen der erfindungsgemäßen Bremsstaubsammelvorrichtung ist das Gehäuse wenigstens zweiteilig ausgebildet und umfasst ein erstes Gehäuseteil zur Anbringung der Bremsstaubsammelvorrichtung an der Scheibenbremse, insbesondere am Bremsträger der Scheibenbremse, sowie ein zweites Gehäuseteil, das abnehmbar am ersten Gehäuseteil befestigt ist. Vorzugsweise sind dabei die auf beiden Seiten der Bremsscheibe angeordneten Lufteinlassöffnungen am ersten Gehäuseteil ausgebildet, wohingegen die Bremsstaubsammelkammer(n) im zweiten Gehäuseteil vorgesehen ist bzw. sind. Auf diese Weise kann das zweite Gehäuseteil im Rahmen von Wartungsarbeiten einfach abgenommen und die in ihm enthaltene(n) Bremsstaubsammelkammer(n) entleert werden.

Zur Überwachung der in die Bremsstaubsammelkammer gelangten Bremsstaubmenge weisen bevorzugte Ausführungsformen der Bremsstaubsammelvorrichtung einen Füllstandssensor auf. Der Füllstandssensor kann mechanisch, elektromechanisch, optisch oder akustisch arbeiten und von Fachleuten auf dem Gebiet der Füllstandsmessung bekannter Art sein. Ein solcher Füllstandssensor kann so geschaltet sein, dass dem Benutzer eines Kraftfahrzeuges, welches mit erfindungsgemäßen Bremsstaubsammelvorrichtungen ausgestattet ist, beispielsweise durch Aufleuchten einer Warnlampe mitgeteilt wird, dass die Bremsstaubsammelkammer demnächst geleert werden muss. Ein solches Entleeren kann wie zuvor beschrieben durch Abnehmen der Bremsstaubsammelkammer und händisches Entleeren derselben stattfinden, oder es ist an der Bremsstaubsammelkammer ein Entleerungsventil vorhanden, an welches eine geeignete, beispielsweise mit Unterdruck arbeitende Entleerungsvorrichtung anschließbar ist, um den in der Bremsstaubsammelkammer enthaltenen Bremsstaub aus der Kammer in die Entleerungsvorrichtung zu überführen.

Damit der im Rahmen von Bremsvorgängen entstehende Bremsstaub möglichst vollständig erfasst und an einer Ausbreitung in die Umwelt gehindert werden kann, sind bevorzugte Ausgestaltungen der erfindungsgemäßen Bremsstaubsammelvorrichtung auf beiden Seiten der Bremsscheibe mit wenigstens je einem Abstreifelement versehen, das zum Inkontaktkommen mit der zugehörigen Seiten der Bremsscheibe bestimmt ist. In konstruktiv und funktionell vorteilhafter Weise ist jedes dieser Abstreifelemente bezüglich des den Bremsstaub mitreißenden Luftstroms den Bremsstaubeinlassöffnungen der Bremsstaubrückhalteeinrichtung vorgelagert, damit von den Abstreifelementen erfasster Bremsstaub in die Bremsstaubeinlassöffnungen und damit in die Bremsstaubsammelkammer gelangen kann. Die Abstreifelemente können beispielsweise bürstenartig ausgebildet sein oder auch lippenförmig. Ihr Kontakt mit der Bremsscheibe kann linienförmig sein oder auch durch eine Vielzahl punktförmiger Kontaktstellen oder andersartig gebildet sein. Wichtig ist lediglich, dass an der Bremsscheibe anhaftender Bremsstaub zuverlässig entfernt wird, ohne das es durch den Kontakt der Abstreifelemente mit der Bremsscheibe zu signifikantem Bremsscheibenverschleiß kommt.

Bei vorteilhaften Ausführungsformen der Bremsstaubsammelvorrichtung sind die Abstreifelemente in Axialrichtung (bezogen auf die Drehachse der Bremsscheibe) beweglich gelagert und werden erst bei einer Betätigung der Bremse axial zur Bremsscheibe hin in einen Eingriff mit derselben bewegt. Auf diese Weise wird ein ständig erhöhter Reibungswiderstand vermieden und der Verschleiß der Abstreifelemente deutlich reduziert. Die Axialbewegung der Abstreifelemente zur Bremsscheibe hin kann bei einer hydraulischen Scheibenbremse beispielsweise hydraulisch erfolgen, indem den Abstreifelementen Kolben zugeordnet sind, die bei einer Betätigung der Bremse mit einem Teil des dann wirkenden Hydraulikdrucks beaufschlagt werden und so die Abstreifelemente gegen die sich drehende Bremsscheibe drücken. Alternativ können die Abstreifelemente beispielsweise federnd in Richtung auf die Bremsscheibe vorgespannt sein, wobei gemäß einer bevorzugten Weiterbildung ein Anschlag vorhanden ist, gegen den das federnd vorgespannte Abstreifelement gedrückt wird und der bei einer Betätigung der Bremse zurückgezogen oder anderweitig entfernt wird, so dass die federnde Vorspannung das Abstreifelement gegen die Bremsscheibe drücken kann. Bei einer Ausführungsvariante mit federnd in Richtung auf die Bremsscheibe vorgespannten Abstreifelementen findet die Rückstellung der Abstreifelemente in ihre Ausgangsstellung nach Beendigung eines Bremsvorgangs hydraulisch statt. In jedem Fall, d.h. unabhängig davon, wie die Abstreifelemente zur Bremsscheibe hin und von ihr weg bewegt werden, findet eine Rückstellung der Abstreifelemente nach erfolgter Bremsung vorzugsweise mit einer gewissen zeitlichen Verzögerung statt, damit während eines Bremsvorgangs erzeugter Bremsstaub möglichst vollständig erfasst werden kann.

Das Gehäuse der erfindungsgemäßen Bremsstaubsammelvorrichtung kann aus jedem für den Anwendungszweck geeigneten Material hergestellt sein. Zu beachten ist, dass das Gehäuse hitzebeständig sein muss, denn Scheibenbremsen können im Betrieb sehr hohe Temperaturen erreichen. Außerdem sollte das Gehäuse möglichst leicht sein, damit die ungefederten Massen einer Kraftfahrzeugradaufhängung nicht über Gebühr erhöht werden. Das Gehäuse kann beispielsweise aus einer Aluminiumlegierung gegossen sein oder auch in Kunststoffspritzgusstechnik hergestellt sein, gegebenenfalls unter Verwendung glasfaserverstärkter Kunststoffe.

Die erfindungsgemäße Bremsstaubsammelvorrichtung ist robust und zuverlässig im Betrieb, braucht für ihren Betrieb keine Hilfsenergiequelle und kann sowohl bei neuen Fahrzeugen als Erstausstattung eingebaut als auch in ältere Fahrzeuge nachgerüstet werden. Bevorzugte Ausführungsbeispiele einer erfindungsgemäßen Bremsstaubsammelvorrichtung werden im Folgenden anhand der schematischen Zeichnungen näher erläutert. Es zeigt:
- Figur 1: eine Seitenansicht einer Kraftfahrzeugscheibenbremse zusammen mit einer daran montierten Bremsstaubsammelvorrichtung gemäß einer ersten Ausführungsform,
- Figur 2: eine Ansicht der Scheibenbremse und Bremsstaubsammelvorrichtung aus Figur 1 von oben,
- Figur 3: eine Ansicht der Scheibenbremse und Bremsstaubsammelvorrichtung aus Figur 1 von schräg unten,
- Figur 4: den Schnitt IV-IV aus Figur 2,
- Figur 5: ein zweites Ausführungsbeispiel der Bremsstaubsammelvorrichtung in einer der Figur 4 entsprechenden Ansicht,
- Figur 6A: die Ansicht VI-VI aus Figur 5,
- Figur 6B: das in Figur 6A gezeigte zweite Gehäuseteil der Bremsstaubsammelvorrichtung in räumlicher Ansicht von schräg vorne,
- Figur 7: eine räumliche Darstellung des zweiten Ausführungsbeispiels,
- Figur 8: eine räumliche Darstellung der Bremsstaubsammelvorrichtung aus Figur 7 montiert an einer Kraftfahrzeugscheibenbremse, und
- Figur 9: die Bremsstaubsammelvorrichtung aus Figur 7 in räumlicher Ansicht von unten.

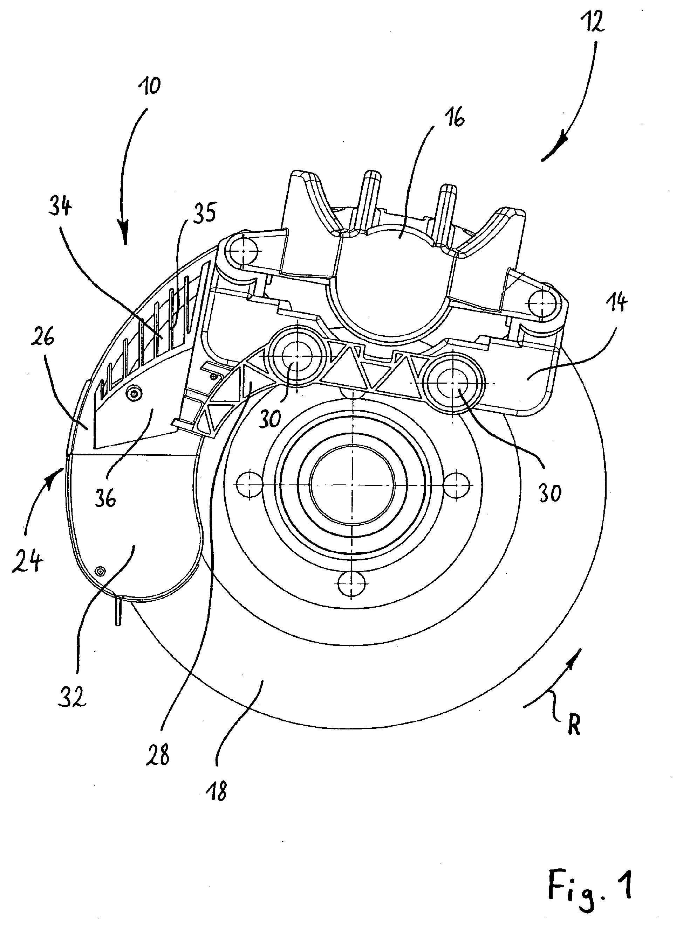

Die Figuren 1 bis 3 zeigen ein erstes Ausführungsbeispiel einer allgemein mit 10 bezeichneten Bremsstaubsammelvorrichtung montiert an einer Kraftfahrzeugscheibenbremse 12.

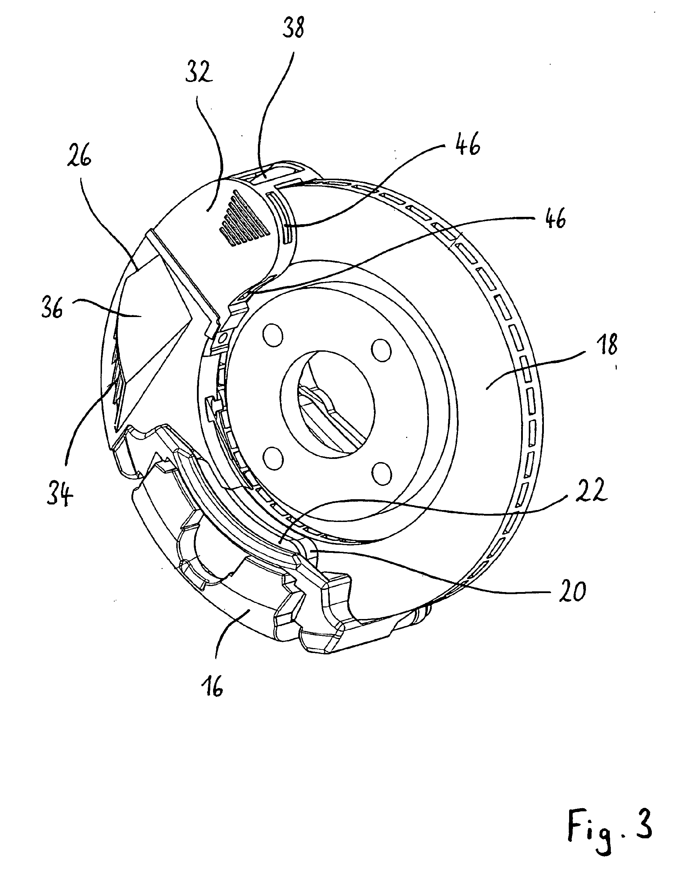

Die Scheibenbremse 12 ist im gezeigten Beispiel eine Schwimmsattelscheibenbremse üblicher Bauart mit einem Bremsträger 14, der zur Befestigung der Bremse an einer Radaufhängung (nicht gezeigt) des Kraftfahrzeugs dient, und einem schwimmend bezüglich des Bremsträgers 14 beweglichen Bremssattel 16, der eine Bremsscheibe 18 übergreift. Die Bremse 12 ist beispielsweise hydraulisch betätigbar, um Reibbeläge auf beiden Seiten der Bremsscheibe 18 gegen Letztere zu pressen und dadurch die Drehung eines mit der Bremsscheibe 18 verbundenen, hier nicht gezeigten Rades abzubremsen. In Figur 3 ist einer der Reibbeläge, nämlich der vom Bremssattel 16 betätigte Reibbelag 20 mit seiner Belagträgerplatte 22, gut zu erkennen. Ein weiterer gleichartiger Reibbelag befindet sich gegenüberliegend auf der anderen Seite der Bremsscheibe 18 und wird unmittelbar von einem Bremskolben (nicht gezeigt) der Scheibenbremse 12 betätigt. Fachleuten auf dem Gebiet der Fahrzeugbremsen ist der konstruktive Aufbau und die Funktion solcher Scheibenbremsen wohlbekannt, weshalb hier nicht weiter darauf eingegangen zu werden braucht. Es sei jedoch darauf hingewiesen, dass die Bremsstaubsammelvorrichtung 10 hier lediglich am Beispiel einer hydraulisch betätigten Kraftfahrzeugscheibenbremse erläutert wird. Es kann sich bei der Scheibenbremse jedoch ebenso gut um eine pneumatisch betätigte Scheibenbremse, eine elektromechanische Scheibenbremse (mit oder ohne Selbstverstärkung) etc. handeln.

Wenn bei einem Bremsvorgang die Reibbeläge einer Scheibenbremse gegen die sich drehende Bremsscheibe gepresst werden, tritt an den Reibbelägen und, in erheblich geringerem Ausmaß, an der Bremsscheibe Verschleiß auf, d.h. sowohl das Reibbelagmaterial als auch die Bremsscheibe werden etwas abgerieben. Der dabei entstehende Abrieb ist partikelförmig und wird allgemein als Bremsstaub bezeichnet. Bei der überwiegenden Mehrzahl aller heute im Verkehr befindlichen Kraftfahrzeuge verteilt sich dieser Bremsstaub auf angrenzende Fahrzeugteile, insbesondere auf das Fahrzeugrad, sowie in die während der Fahrt an der Bremse vorbeiströmende Luft, wird also insgesamt an die Umwelt abgegeben. Um dies soweit wie möglich zu verhindern, ist die in den Figuren gezeigte Bremsstaubsammelvorrichtung 10 mit der Scheibenbremse 12 verbunden.

Die Bremsstaubsammelvorrichtung 10 schließt sich wie aus den Figuren ersichtlich unmittelbar an den Bremssattel 16 der Bremse 12 an, damit zwischen der Bremsstaubsammelvorrichtung 10 und dem Bremssattel 16 kein Bremsstaub austreten kann. Falls erforderlich, ist zwischen der Bremsstaubsammelvorrichtung 10 und dem Sattel 16 eine Dichtung angeordnet (hier nicht gezeigt), jedoch kann eine ausreichende Abdichtung dieses Bereichs auch durch beispielsweise einander etwas überlappende Bauteile erreicht werden.

Die Bremsstaubsammelvorrichtung 10 hat ein in Seitenansicht allgemein kreisringsektorförmiges Gehäuse 24, das zum Übergreifen des sich in Hauptdrehrichtung R der Bremsscheibe 18 unmittelbar an den Bremssattel 16 anschließenden Bremsscheibenabschnitts ausgebildet ist. Mit dem Begriff "Hauptdrehrichtung" ist hier diejenige Drehrichtung der Bremsscheibe 18 gemeint, in die sie sich im Betrieb überwiegend dreht, bei einer Fahrzeugscheibenbremse also die Drehrichtung bei Vorwärtsfahrt des Fahrzeugs.

Das Gehäuse 24 ist im Querschnitt U-förmig (siehe Figur 3) und besteht im gezeigten Ausführungsbeispiel aus zwei Gehäuseteilen 26 und 28. Ein erstes Gehäuseteil 26 dient zum Anschluss an den Bremssattel 16 und ist mit einem Arm 28 (siehe Figur 1) zur Befestigung des Gehäuses 24 am Bremsträger 14 versehen. Das freie Ende des Arms 28 weist hierzu zwei Schraubendurchgangslöcher 30 auf, durch die sich nicht gezeigte Schrauben erstrecken, welche den Bremsträger 14 an der nicht dargestellten Radaufhängung des Fahrzeugs befestigen. Das zweite Gehäuseteil 32 ist abnehmbar mit dem ersten Gehäuseteil 26 verbunden, beispielsweise durch nicht näher dargestellte Schnapp- bzw. Rastverbindungen.

Am Gehäuse 24 ist auf jeder Seite eine sich nach außen trichterförmig erweiternde Lufteinlassöffnung 34 vorhanden, deren Lufteinlassquerschnitt wie dargestellt von Rippen 35 überspannt wird, um den Eintritt größerer Fremdkörper zu verhindern. Im gezeigten Ausführungsbeispiel sind diese seitlichen Lufteinlassöffnungen 34 am ersten Gehäuseteil 26 des Gehäuses 24 der Bremsstaubsammelvorrichtung 10 ausgebildet. Trichterförmige Ausbuchtungen 36 am ersten Gehäuseteil 26 sind so angeordnet und gestaltet, dass die durch die Lufteinlassöffnungen 34 einströmende Luft in das Gehäuse 24 hinein und in Richtung auf die Bremsscheibe 18 geleitet wird, um diese im Betrieb zu kühlen.

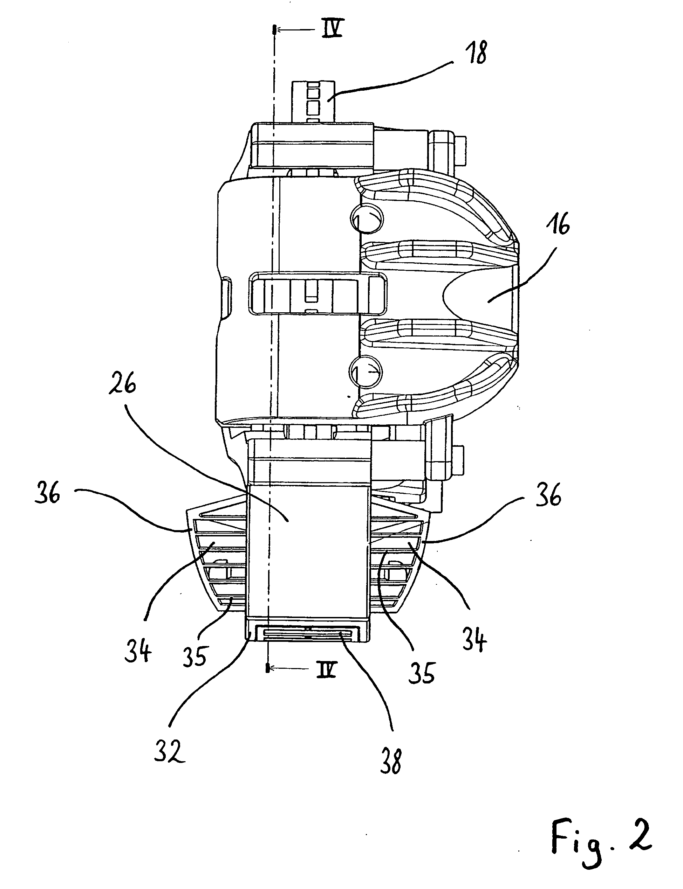

Auf der stirnseitigen Außenfläche des Gehäuses 24 befindet sich darüber hinaus eine weitere Lufteinlassöffnung 38, deren Lufteinlassquerschnitt ebenfalls verrippt ist (siehe Figur 2) und durch die Luft ebenfalls in das Gehäuse 24 und zur Bremsscheibe 18 hin strömt. Im Ausführungsbeispiel der Figuren 1 bis 4 ist diese radiale Lufteinlassöffnung 38 im zweiten Gehäuseteil 32 ausgebildet, sie kann sich bei abgewandelten Ausführungsbeispielen aber auch in das erste Gehäuseteil 26 hinein erstrecken oder auch nur im ersten Gehäuseteil 26 vorhanden sein.

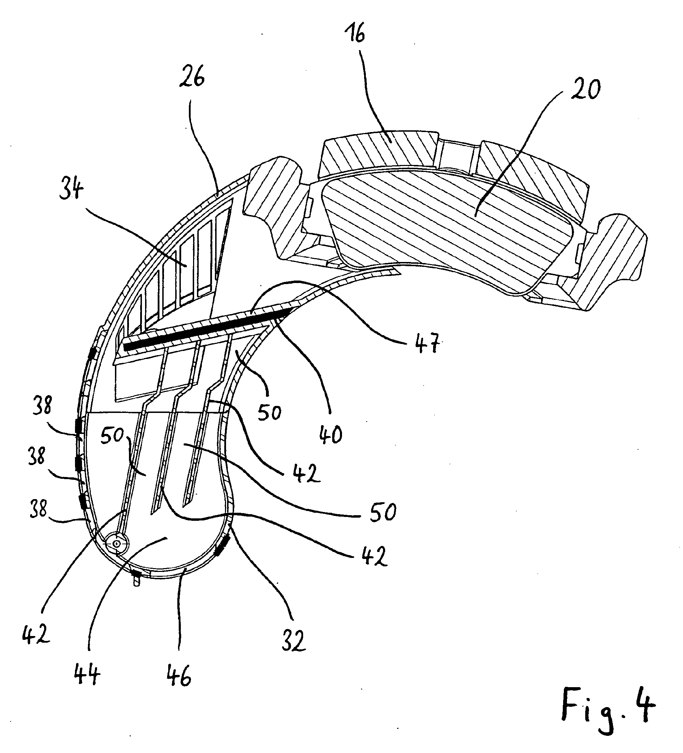

Im Inneren des Gehäuses 24 der Bremsstaubsammelvorrichtung 10 befindet sich eine Bremsstaubrückhalteeinrichtung, zu der - siehe Figur 4 - beidseits der Bremsscheibe 18 angeordnete Abstreifelemente 40, Strömungsleitlamellen 42, Bremsstaubsammelkammern 44 und Luftauslassöffnungen 46 gehören.

Die Abstreifelemente 40 haben im gezeigten Ausführungsbeispiel ein leistenförmiges Aussehen und sind bezüglich der Bremsscheibe 18 axial beweglich in Halterungen 47 aufgenommen, die innen am ersten Gehäuseteil 26 ausgebildet sind. Die Abstreifelemente 40 sind dazu vorgesehen, mit der ihnen zugewandten Oberfläche der Bremsscheibe 18 in Kontakt zu kommen, um an der Bremsscheibenoberfläche anhaftenden Bremsstaub zu entfernen. Hierzu können die Abstreifelemente 14 federnd gegen die Bremsscheibenoberfläche vorgespannt sein, sie können aber auch nur bei einem Bremsvorgang an die Bremsscheibe 18 angelegt werden, wie später noch beschrieben werden wird.

Die in Kontakt mit der Bremsscheibenoberfläche kommende Seite eines jeden Abstreifelements 40 kann beispielsweise bürstenförmig sein, wobei Kobaltbürsten sich als besonders gut geeignet erwiesen haben. Alternativ kann eine Kontaktlippe vorhanden sein, die den Bremsstaub von der Bremsscheibenoberfläche abstreift. Andere Ausführungsvarianten stehen dem Fachmann ebenfalls zur Verfügung, zu achten ist lediglich auf eine ausreichende Hitzebeständigkeit der Abstreifelemente 40 sowie auf ein günstiges Verschleißverhalten sowohl hinsichtlich der Abstreifelemente 40 selbst als auch hinsichtlich der von ihnen zumindest zeitweise berührten Bremsscheibe 18.

Wie insbesondere aus Figur 4 gut ersichtlich, sind die Abstreifelemente 40 schrägstehend angeordnet, d.h. ein gegebener Abschnitt der Bremsscheibe 18 berührt die Abstreifelemente 40 zunächst an ihrem radial inneren Ende und kommt dann sukzessive mit den radial weiter außen liegenden Teilen der Abstreifelemente 40 in Kontakt. Auf diese Weise wird an der Bremsscheibe 18 anhaftender Bremsstaub von innen nach außen entfernt und die Fliehkraft treibt entfernten Bremsstaub radial auswärts bis in den durch die seitlichen Lufteinlassöffnungen 34 eintretenden Luftstrom. Ferner wird im Betrieb der Bremse 12 Abrieb, der sich am Reibbelag 20 und dem nicht dargestellten, gegenüberliegenden Reibbelag bildet, von der sich drehenden Bremsscheibe 18 ebenfalls mitgerissen und in den durch die seitlichen Lufteinlassöffnungen 34 tangential eintretenden Luftstrom geführt.

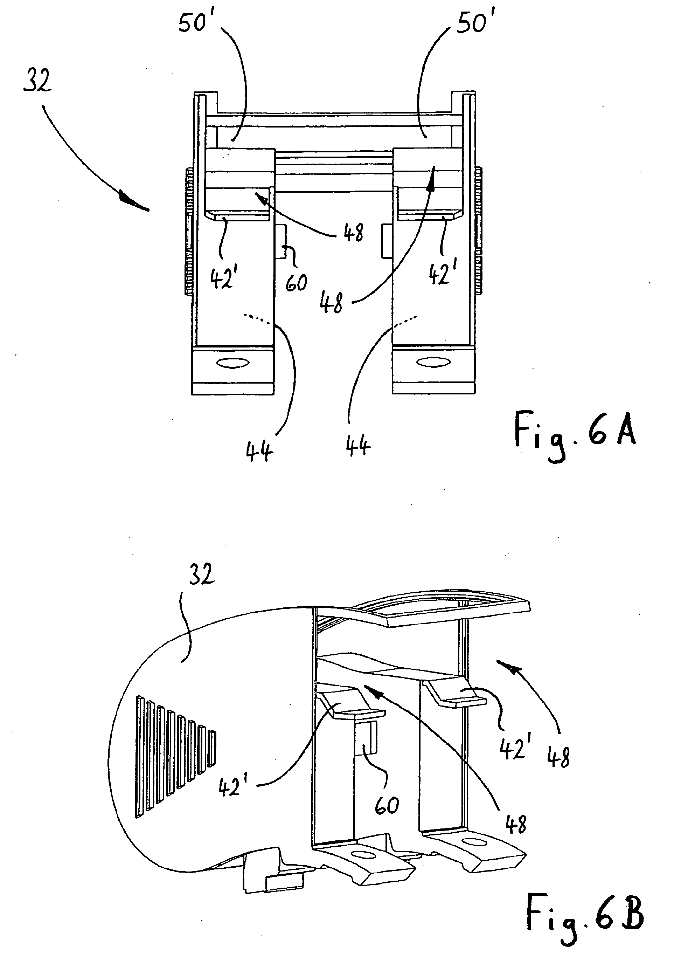

Der solchermaßen mit Bremsstaub beladene Luftstrom tritt dann durch Bremsstaubeinlassöffnungen 48 in Kanäle 50 ein, die zwischen den einzelnen Strömungsleitlamellen 42 und/oder dem Gehäuse 24 begrenzt sind. In dem in den Figuren 1 bis 4 gezeigten Ausführungsbeispiel sind drei solcher Strömungsleitlamellen 42 auf jeder Seite der Bremsscheibe 18 vorhanden, wobei jede Strömungsleitlamelle 42 axial von einer inneren. Seitenfläche des zweiten Gehäuseteils 32 in Richtung auf die Bremsscheibe 18 vorspringt und sich im Wesentlichen in Umfangsrichtung der Bremsscheibe 18 erstreckt. Die freien Enden der Strömungsleitlamellen 42 begrenzen zusammen mit umgebenden Gehäusewänden die Bremsstaubeinlassöffnungen 48 (siehe Figuren 6A und 6B). Obwohl in Figur 4 nicht dargestellt, verkleinert sich der Strömungsquerschnitt der Kanäle 50 von den Bremsstaubeinlassöffnungen 48 bis zu ihrem Ende, um die Strömungsgeschwindigkeit in jedem Kanal 50 entlang seiner Erstreckung zu erhöhen und dadurch eine Ablagerung von Bremsstaub in den Kanälen 50 möglichst zu verhindern.

Die Kanäle 50 münden in die Bremsstaubsammelkammer 44, wo sich aufgrund der schlagartigen Strömungsgeschwindigkeitsverringerung der mitgerissene Bremsstaub absetzt. Die in die Bremsstaubsammelkammer 44 eingeströmte Luft kann durch die Luftauslassöffnungen 46 austreten, die am stirnseitigen freien Ende des zweiten Gehäuseteils 32 auf jeder Seite der Bremsscheibe 18 ausgebildet und mit einem Filter (nicht gezeigt) aus einem Material überdeckt sind, das Luft und Wasser passieren lässt, Bremsstaub jedoch zurückhält.

Obwohl in Figur 4 nur eine Seite der Bremsstaubrückhalteeinrichtung zu erkennen ist, versteht es sich, dass diese auf der anderen Seite der Bremsscheibe 18 spiegelbildlich ebenso vorhanden ist, d.h. auf jeder Seite der Bremsscheibe 18 befinden sich ein Abstreifelement 40, die Strömungsleitlamellen 42 und eine Bremsstaubsammelkammer 44 mit ihren Luftauslassöffnungen 46. Durch Abnehmen des zweiten Gehäuseteils 32, in dem sich die Bremsstaubsammelkammern 44 befinden, kann der angesammelte Bremsstaub umweltgerecht entsorgt oder einer Wiederverwendung zugeführt werden.

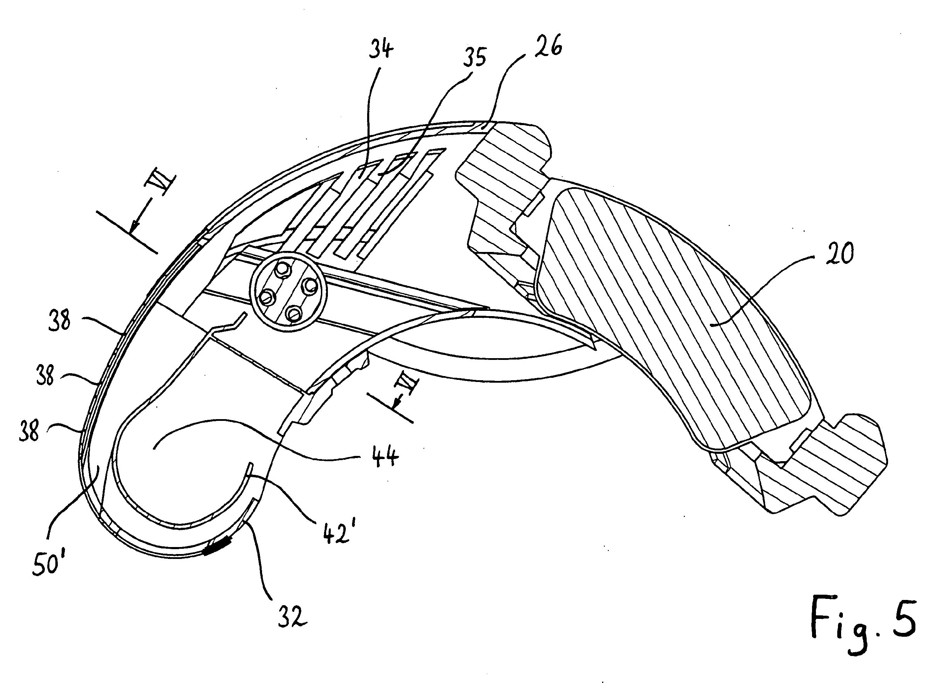

Figur 5 zeigt im Längsschnitt eine etwas abgewandelte Ausführungsform einer Bremsstaubsammelvorrichtung 10, bei der sich auf jeder Seite der Bremsscheibe 18 lediglich eine Strömungsleitlamelle 42' von einer Bremsstaubeinlassöffnung 48' bis in die Bremsstaubsammelkammer 44 erstreckt, wobei die Lamelle 42' sich zunächst im Wesentlichen in der Hauptdrehrichtung R der Bremsscheibe 18 erstreckt, dann radial einwärts verläuft und sich schließlich wieder ein Stück zurück entgegen der Hauptdrehrichtung R erstreckt.

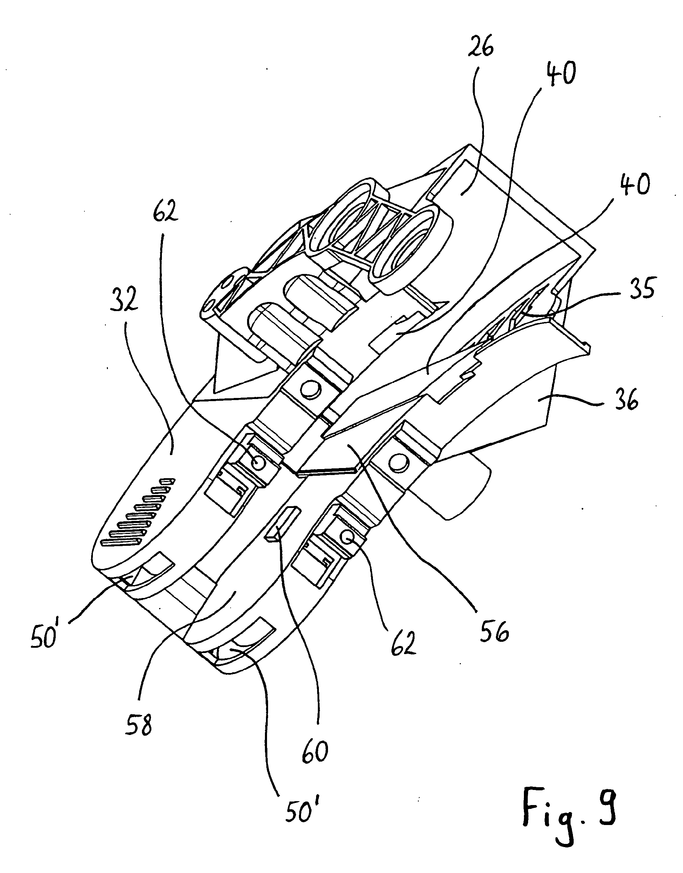

Wie aus den Figuren 6A und 6B gut ersichtlich, ist jede Bremsstaubeinlassöffnung 48' am Beginn des zugehörigen Kanals 50 angeordnet und durch die Lufteintrittsfläche gebildet, die unten von der Lamelle 42', seitlich außen von den Seitenwänden des zweiten Gehäuseteils 32 und oben ebenfalls vom Gehäuseteil 32 begrenzt ist. Die innere seitliche Begrenzung bildet im dargestellten Ausführungsbeispiel ein innerer Wandfortsatz 56 (zu sehen beispielsweise in Figur 9) des ersten Gehäuseteils 26, der in Drehrichtung R nach den Abstreifelementen 40 angeordnet ist. Wiederum weist der durch die Lamelle 42' begrenzte Kanal 50' einen vom Anfang zum Ende hin abnehmenden Strömungsquerschnitt auf. Wie besser aus Figur 5 ersichtlich, erstrecken sich bei dieser Ausführungsform die Rippen 35 von der Lufteinlassöffnung 34 nach innen und werden dabei zunehmend dicker, so dass die Rippen 35 zwischen sich Lufteinströmkanäle mit kontinuierlich kleiner werdendem Strömungsquerschnitt bilden. Durch diese Ausgestaltung wird es Bremsstaub erschwert, durch die Lufteinlassöffnungen 34 aus der Bremsstaubsammelvorrichtung 10 auszutreten. Die Funktion dieses Ausführungsbeispiels entspricht der Funktion des unter Bezugnahme auf die Figuren 1 bis 4 beschriebenen Ausführungsbeispiels.

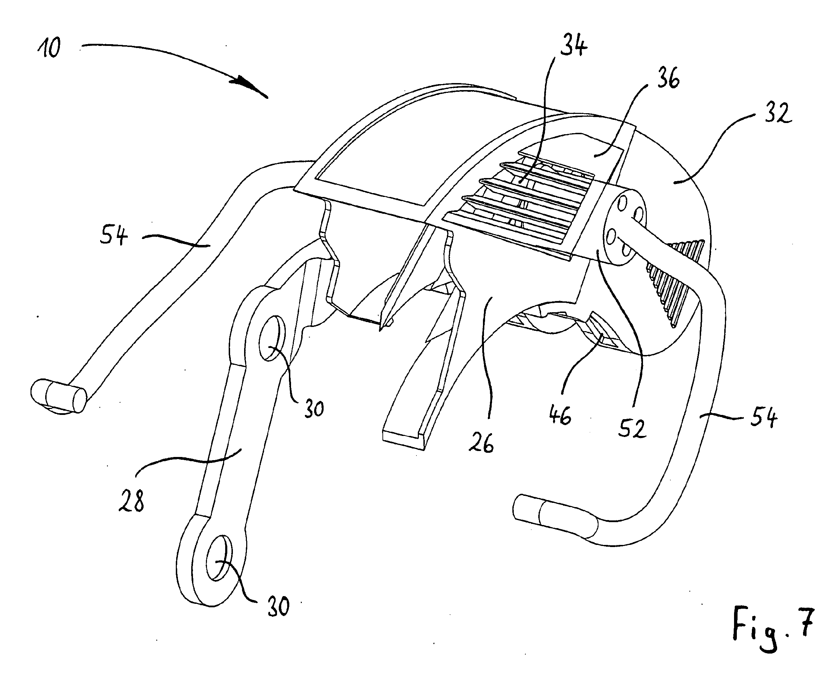

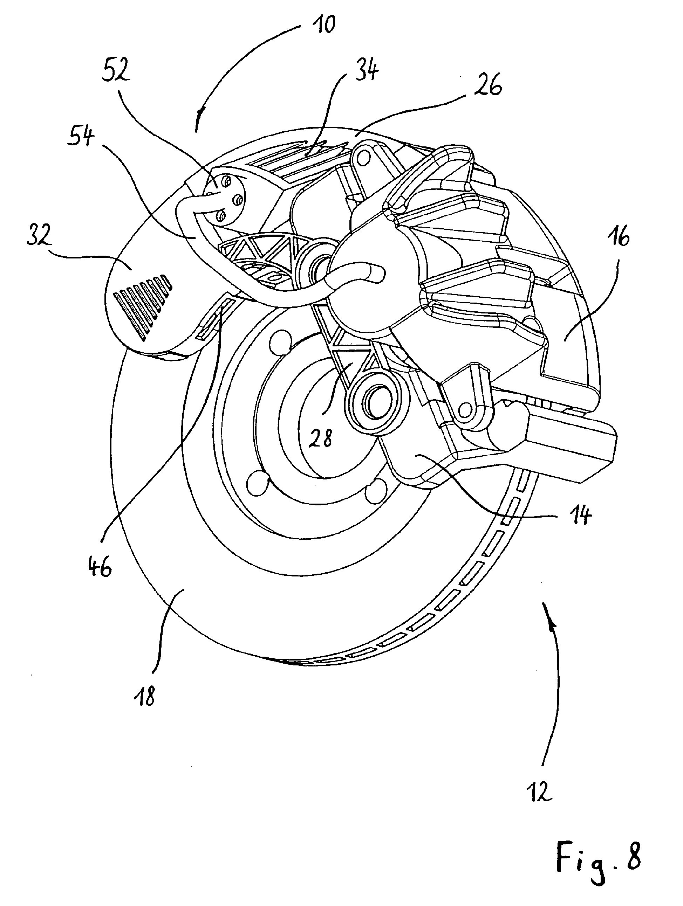

Die Figuren 7 und 8 zeigen weitere Details des zweiten Ausführungsbeispiels der Bremsstaubsammelvorrichtung 10. Die Abstreifelemente 40 können bei einem Bremsvorgang hydraulisch gegen die Bremsscheibe 18 gedrückt werden. Hierzu ist außen auf jeder Seite des ersten Gehäuseteils 26 in dem Bereich, in dem sich innen das Abstreifelement 40 befindet, ein Hydraulikzylinder 52 angebracht, in dem ein hier nicht gezeigter Hydraulikkolben hin und her bewegbar ist. Jeder Hydraulikzylinder 52 ist mittels einer Hydraulikleitung 54 mit dem Bremszylinder der Scheibenbremse 12 verbunden, wodurch bei einer Betätigung der Bremse 12 der dann wirkende Hydraulikdruck den Hydraulikkolben im Hydraulikzylinder 52 in Richtung auf die Bremsscheibe 18 drängt, so dass das zugeordnete Abstreifelement 40 von dem Hydraulikkolben in einen Kontakt mit der Bremsscheibenoberfläche bewegt wird. Bei Beendigung des Bremsvorgangs sinkt der Hydraulikdruck soweit ab, dass jedes Abstreifelement 40 entweder nur noch ganz leicht an der Bremsscheibenoberfläche anliegt, oder es wird durch eine geeignete Rückstelleinrichtung dafür gesorgt, dass die Abstreifelemente 40 außer Eingriff mit der Bremsscheibe 18 geraten.

Zum besseren Verständnis ist in Figur 9 das in den Figuren 5 bis 8 dargestellte zweite Ausführungsbeispiel ergänzend von unten gezeigt. Zu erkennen ist einer der bereits erwähnten Fortsätze 56 einer Innenwand des ersten Gehäuseteils 26, die die innere Begrenzung der Bremsstaubeinlassöffnungen 48 bilden. Aus der Position dieser Fortsätze 56 lässt sich auch gut erkennen, dass die Bremsstaubeinlassöffnungen 48 in Drehrichtung R gesehen nach den Lufteinlassöffnungen 34 und den Abstreifelementen 40 (in dieser Reihenfolge) angeordnet sind.

An die Bremsstaubsammelkammern 44 zur Bremsscheibe hin verschließenden Innenwänden 58 (nur eine davon ist in Figur 9 sichtbar) ist jeweils ein Vorsprung 60 angeordnet, der einen großflächigen Kontakt der sich drehenden Bremsscheibe 18 mit dem Gehäuse 24 und insbesondere dem zweiten Gehäuseteil 32 verhindert.

In Öffnungen 62 an der Unterseite des zweiten Gehäuseteils 32 können Ventile angeordnet sein, die ein Absaugen des gesammelten Bremsstaubes gestatten, der sich in den Bremsstaubsammelkammern 44 befindet.

## Patentansprüche

1. Bremsstaubsammelvorrichtung (10) für eine Scheibenbremse (12), die eine Bremsscheibe (18) und einen letztere übergreifenden Bremssattel (16) aufweist, mit einem Gehäuse (24), das zum Übergreifen eines Abschnitts der Bremsscheibe (18) ausgebildet ist, der sich in Hauptdrehrichtung (R) der Bremsscheibe (18) unmittelbar an den Bremssattel (16) anschließt, und einer in dem Gehäuse (24) angeordneten Bremsstaubrückhalteeinrichtung mit mehreren Bremsstaubeinlassöffnungen,
**dadurch gekennzeichnet, dass** das Gehäuse (24) mehrere Lufteintassöffnungen (34; 38) hat, die von den Bremsstaubeinlassöffnüngen (48) getrennt sind.

2. Bremsstaubsammelvorrichtung nach Anspruch 1,
**dadurch gekennzeichnet, dass** das Gehäuse (24) auf beiden Seiten der Bremsscheibe (18) wenigstens eine bezüglich der Hauptdrehrichtung (R) der Bremsscheibe (18) vor den Bremsstaubeinlassöffnungen (48) angeordnete Lufteinlassöffnung (34) aufweist.

3. Bremsstaubsammelvorrichtung nach Anspruch 1 oder 2,
**dadurch gekennzeichnet, dass** das Gehäuse (24) radial außerhalb der Bremsscheibe (18) wenigstens eine Lufteinlassöffnung (38) aufweist.

4. Bremsstaubsammelvorrichtung nach einem der Ansprüche 1 bis 3, **dadurch gekennzeichnet, dass** das Gehäuse (24) von den Lufteinlassöffnungen (34; 38) getrennte Luftauslassöffnungen (46) aufweist.

5. Bremsstaubsammelvorrichtung nach Anspruch 4,
**dadurch gekennzeichnet, dass** die Luftauslassöffnungen (46) Filter umfassen, die Bremsstaub zurückhalten, Luft und Wasser jedoch passieren lassen.

6. Bremsstaubsammelvorrichtung nach einem der vorhergehenden Ansprüche,
**dadurch gekennzeichnet, dass** die Bremsstaubrückhalteeinrichtung auf beiden Seiten der Bremsscheibe (18) wenigstens eine sich radial zur Bremsscheibe (18) und entlang des Umfangs derselben erstreckende Lamelle (42, 42') umfasst, die an einer Bremsstaubeinlassöffnung (48) beginnt und in einer Bremsstaubsammelkammer (44) endet.

7. Bremsstaubsammelvorrichtung nach Anspruch 6,
**dadurch gekennzeichnet, dass** mehrere sich von je einer Bremsstaubeinlassöffnung (48) bis in die Bremsstaubsammelkammer (44) erstreckende Lamellen (42) vorhanden sind, die zwischen sich Kanäle (50) zum Leiten von Bremsstaub in die Bremsstaubsammelkammer (44) festlegen.

8. Bremsstaubsammelvorrichtung nach Anspruch 6 oder 7,
**dadurch gekennzeichnet, dass** der Querschnitt der oder jeder Bremsstaubeinlassöffnung (48) größer als ein Mündungsquerschnitt am Ende jeder Lamelle (42, 42') ist.

9. Bremsstaubsammelvorrichtung nach einem der Ansprüche 6 bis 8,
**dadurch gekennzeichnet, dass** jede Lamelle (42') sich entlang des Umfangs der Bremsscheibe (18) zunächst in der Hauptdrehrichtung (R), dann radial einwärts und schließlich entgegen der Hauptdrehrichtung (R) erstreckt.

10. Bremsstaubsammelvorrichtung nach einem der vorhergehenden Ansprüche,
**dadurch gekennzeichnet, dass** das Gehäuse (24) wenigstens zweiteilig ausgebildet ist, mit einem ersten Gehäuseteil (26) zur Anbringung der Bremsstaubsammelvorrichtung an der Scheibenbremse (12) und einem zweiten Gehäuseteil (32), das abnehmbar am ersten Gehäuseteil (26) befestigt ist.

11. Bremsstaubsammelvorrichtung nach Anspruch 10 in Verbindung mit Anspruch 2,
**dadurch gekennzeichnet, dass** die auf beiden Seiten der Bremsscheibe (18) angeordneten Lufteinlassöffnungen (34) am ersten Gehäuseteil (26) ausgebildet sind.

12. Bremsstaubsammelvorrichtung nach Anspruch 10 oder 11 in Verbindung mit einem der Ansprüche 6 bis 9,
**dadurch gekennzeichnet, dass** die Bremsstaubsammelkammer (44) im zweiten Gehäuseteil (32) ausgebildet ist.

13. Bremsstaubsammelvorrichtung nach einem der Ansprüche 6 bis 12,
**dadurch gekennzeichnet, dass** ein Füllstandssensor die Menge an Bremsstaub in der Bremsstaubsammelkammer (44) überwacht.

14. Bremsstaubsammelvorrichtung nach Anspruch 13,
**dadurch gekennzeichnet, dass** der Füllstandssensor ein optischer Sensor ist.

15. Bremsstaubsammelvorrichtung nach einem der Ansprüche 6 bis 14,
**dadurch gekennzeichnet, dass** die Bremsstaubsammelkammer (44) ein Entleerungsventil umfasst.

16. Bremsstaubsammelvorrichtung nach einem der vorhergehenden Ansprüche,
**dadurch gekennzeichnet, dass** auf beiden Seiten der Bremsscheibe (18) wenigstens ein den Bremsstaubeinlassöffnungen (48) vorgelagertes, zum Inkontaktkommen mit der entsprechenden Seite der Bremsscheibe (18) bestimmtes Abstreifelement (40) vorhanden ist.

17. Bremsstaubsammelvorrichtung nach Anspruch 16,
**dadurch gekennzeichnet, dass** die Abstreifelemente (40) axial beweglich gelagert sind und bei einer Betätigung der Scheibenbremse (12) axial zur Bremsscheibe (18) hin in Eingriff mit derselben bewegt werden.

18. Bremsstaubsammelvorrichtung nach Anspruch 17,
**dadurch gekennzeichnet, dass** die Abstreifelemente (40) hydraulisch zur Bremsscheibe (18) hin bewegt werden.

19. Scheibenbremse (12),
**gekennzeichnet durch** eine Bremsstaubsammelvorrichtung (10) nach einem der vorhergehenden Ansprüche.

## Claims

1. A brake dust collector (10) for a disc brake (12) comprising a brake disc (18) and a brake caliper (16) clasping the latter, including a housing (24) designed to clasp a portion of the brake disc (18) directly adjoining the brake caliper (16) in the main direction of rotation (R) of the brake disc (18) and provided arranged in the housing (24) with a brake dust retainer comprising a plurality of brake dust intake ports, **characterized in that** the housing (24) features a plurality of air intake ports (34; 38) separate from the brake dust intake ports (48).

2. The brake dust collector as set forth in claim 1
**characterized in that** the housing (24) is provided on both sides of the brake disc (18) with at least one air intake port (34) arranged upstream of the brake dust intake ports (48) as viewed in the main direction of rotation (R) of the brake disc (18).

3. The brake dust collector as set forth in claim 1 or 2,
**characterized in that** the housing (24) features at least one air intake port (38) radially external to the brake disc (18).

4. The brake dust collector as set forth in any of the claims 1 to 3,
**characterized in that** the housing (24) comprises air outlet ports (46) arranged separate from the air intake ports (34; 38).

5. The brake dust collector as set forth in claim 4,
**characterized in that** the air outlet ports (46) feature filters which retain the brake dust but allow air and water to pass.

6. The brake dust collector as set forth in any of the preceding claims,
**characterized in that** the brake dust retainer features on both sides of the brake disc (18) at least one slat (42, 42') extended radially relative to the brake disc (18) and along the circuference of the brake disc (18), beginning at a brake dust intake port (48) and ending in the brake dust collection chamber (44).

7. The brake dust collector as set forth in claim 6,
**characterized in that** a plurality of slats (42) is provided, each extending from an assigned brake dust intake port (48) into the brake dust collection chamber (44), defining between each other passageways (50) for directing the brake dust into the brake dust collection chamber (44).

8. The brake dust collector as set forth in claim 6 or 7,
**characterized in that** the cross-section of the one or each brake dust intake port (48) is greater than the porting criss section at the end of each slat (42, 42').

9. The brake dust collector as set forth in any of the claims 6 to 8,
**characterized in that** each slat (42') extends along the the circuference of the brake disc (18) firstly in the main direction of rotation (R), before extending radially inwards and finally contrary to the main direction of rotation (R).

10. The brake dust collector as set forth in any of the preceding claims,
**characterized in that** the housing (24) is configured split to comprise a first housing part (26) for mounting the brake dust collector on the disc brake (12), as well
as a second housing part (32) releasably secured to the first housing part (26).

11. The brake dust collector as set forth in claim 10 in conjunction with claim 2,
**characterized in that** the air intake ports (34) arranged on both sides of the brake disc (18) are configured on the first housing part (26).

12. The brake dust collector as set forth in claim 10 or 11 in conjunction with any of the claims 6 to 9,
**characterized in that** the brake dust collection chamber (44) is provided in the second housing part (32).

13. The brake dust collector as set forth in any of the claims 6 to 12,
**characterized in that** a level sensor monitors the amount of brake dust in the brake dust collection chamber (44).

14. The brake dust collector as set forth in claim 13,
**characterized in that** the level sensor is an optical sensor.

15. The brake dust collector as set forth in any of the claims 6 to 14,
**characterized in that** the brake dust collection chamber (44) comprises a dump valve.

16. The brake dust collector as set forth in any of the preceding claims,
**characterized in that** provided on both sides of the brake disc (18) upstream of the brake dust intake ports (48) is at least one wiper (4) designed to come into contact with the corresponding sides of the brake disc (18).

17. The brake dust collector as set forth in claim 16,
**characterized in that** the wipers (40) are mounted movable axially and come into contact axially with the brake disc (18) when the disc brake (12) is activated.

18. The brake dust collector as set forth in claim 17,
**characterized in that** the wipers (40) are moved to the brake disc (18) hydraulically.

19. A disc brake (12),
**characterized by** a brake dust collector (10) as set forth in any of the preceding claims.

## Revendications

1. Collecteur de poussières de freinage (10) pour un frein à disque (2), qui présente un disque de frein (18) et un étrier de frein (16) s'engageant au-dessus de ce dernier, comprenant un carter (24) qui est conçu pour recouvrir une section du disque de frein (18) qui est directement contiguë à l'étrier de frein (16) dans le sens de rotation principal (R) du disque de frein (18), et un dispositif de retenue de poussières de freinage disposé dans le carter (24) et doté de plusieurs ouvertures d'admission de poussières de freinage, **caractérisé en ce que** le carter (24) possède plusieurs ouvertures d'admission d'air (34 ; 38) qui sont séparées des ouvertures d'admission de poussières de freinage (48).

2. Collecteur de poussières de freinage selon la revendication 1, **caractérisé en ce que** le carter (24) présente sur les deux côtés du disque de frein (18) au moins une ouverture d'admission d'air (34) disposée en amont des ouvertures d'admission de poussières de freinage (48) par rapport au sens de rotation principal (R) du disque de frein (18).

3. Collecteur de poussières de freinage selon la revendication 1 ou 2, **caractérisé en ce que** le carter (24) présente au moins une ouverture d'admission d'air (38) radialement, à l'extérieur du disque de frein (18).

4. Collecteur de poussières de freinage selon l'une des revendications 1 à 3, **caractérisé en ce que** le carter (24) présente des ouvertures d'échappement d'air (46) séparées des ouvertures d'admission d'air (34 ; 48).

5. Collecteur de poussières de freinage selon la revendication 4, **caractérisé en ce que** les ouvertures d'échappement d'air (46) comprennent des filtres qui retiennent les poussières de freinage, mais laissent passer l'air et l'eau.

6. Collecteur de poussières de freinage selon l'une des revendications précédentes, **caractérisé en ce que** le dispositif de retenue de poussières de freinage comprend sur les deux côtés du disque de frein (18) au moins une lamelle (42, 42') s'étendant radialement par rapport au disque de frein (18) et le long du pourtour de ce dernier, qui commence au niveau d'une ouverture d'admission de poussières de freinage (48) et se termine dans une chambre collectrice de poussières de freinage (44).

7. Collecteur de poussières de freinage selon la revendication 6, **caractérisé en ce qu'**il existe plusieurs lamelles (42) s'étendant à chaque fois d'une ouverture d'admission de poussières de freinage (48) jusqu'à la chambre collectrice de poussières de freinage (44), qui définissent entre elles des canaux (50) d'acheminement de poussières de freinage dans la chambre collectrice de poussières de freinage (44).

8. Collecteur de poussières de freinage selon la revendication 6 ou 7, **caractérisé en ce que** la section de la ou de chaque ouverture d'admission de poussières de freinage (48) est supérieure à une, section d'embouchure à l'extrémité de chaque lamelle (42, 42').

9. Collecteur de poussières de freinage selon l'une des revendications 6 à 8, **caractérisé en ce que** chaque lamelle (42) s'étend le long du pourtour du disque de frein (18) tout d'abord dans le sens de rotation principal (R), puis radialement vers l'intérieur et enfin dans la direction opposée au sens de rotation principal (R).

10. Collecteur de poussières de freinage selon l'une des revendications précédentes, **caractérisé en ce que** le carter (24) est conçu au moins en deux parties, avec une première partie de carter (26) permettant le montage du collecteur de poussières de freinage sur le frein à disque (12) et une deuxième partie de carter (32) qui est fixée à la première partie de carter (26) de façon amovible.

11. Collecteur de poussières de freinage selon la revendication 10 en liaison avec la revendication 12, **caractérisé en ce que** les ouvertures d'admission d'air (34) disposées sur les deux côtés du disque de frein (18) sont réalisées sur la première partie de carter (26).

12. Collecteur de poussières de freinage selon la revendication 10 ou 11 en liaison avec l'une des revendications 6 à 9, **caractérisé en ce que** la chambre collectrice de poussières de freinage (44) est réalisée dans la deuxième partie de carter (32).

13. Collecteur de poussières de freinage selon l'une des revendications 6 à 12, **caractérisé en ce qu'**un capteur de niveau de remplissage surveille la quantité de poussières de freinage dans la chambre collectrice de poussières de freinage (44).

14. Collecteur de poussières de freinage selon la revendication 13, **caractérisé en ce que** le capteur de niveau de remplissage est un capteur optique.

15. Collecteur de poussières de freinage selon l'une des revendications 6 à 14, **caractérisé en ce que** la chambre collectrice de poussières de freinage (44) comprend une vanne de vidange.

16. Collecteur de poussières de freinage selon l'une des revendications précédentes, **caractérisé en ce qu'**au moins un élément de raclage (40) monté en amont des ouvertures d'admission de poussières de freinage (48), destiné à venir en contact avec le côté correspondant du disque de frein (18), est présent sur les deux côtés du disque de frein (18).

17. Collecteur de poussières de freinage selon la revendication 16, **caractérisé en ce que** les éléments de raclage (40) sont montés axialement de façon à pouvoir se déplacer et, en cas d'actionnement du frein à disque (12), sont déplacés axialement vers le disque de frein (18) en prise avec ce dernier.

18. Collecteur de poussières de freinage selon la revendication 17, **caractérisé en ce que** les éléments de raclage (40) sont déplacés hydrauliquement vers le disque de frein (18).

19. Frein à disque (12), **caractérisé par** un collecteur de poussières de freinage (10) selon l'une des revendications précédentes.
